# FASCICULE DE BREVET EUROPEEN

(11) **EP 1 617 189 B1**
(45) Date de publication et mention de la délivrance du brevet: **30.07.2008**
(21) Numéro de dépôt: 05014442.7
(22) Date de dépôt: 04.07.2005
(51) Int. Cl.: G01F 23/64, G01F 23/76, B60T 17/22

(54) **Moyen détecteur de niveau de liquide comprenant un flotteur, et procédé de montage**
Flüssigkeitspegeldetektor mit einem Schwimmer und dessen Montageverfahren
Liquid level detector comprising a float and its assembly method

(30) Priorité: 07.07.2004 FR 0407598
(43) Date de publication de la demande: 18.01.2006
(73) Titulaire: ROBERT BOSCH GMBH, 70442 Stuttgart (DE)
(72) Inventeur: Lenczner, Sylvain, 75020 Paris (FR); L'Aot, Jean-Michel, 93200 Saint-Denis (FR); Lopez Da Cruz, Nicolas, 93600 Aulnay Sous Bois (FR); Justaman, Aurélien, 93190 Livry Gargan (FR); Beaures-D'Augeres, Olivier, 75020 Paris (FR)
(74) Mandataire: Hurwic, Aleksander Wiktor

(56) Documents cités:
- EP-A- 0 387 393
- EP-A- 1 040 977
- DE-U1- 9 319 533
- DE-U1- 9 406 810
- US-A- 3 246 518
- US-A- 5 083 115
- US-A1- 2003 056 827

## Description

L'invention se rapporte à un moyen détecteur de niveau de liquide dans un réservoir hydraulique d'un véhicule automobile. Plus particulièrement, l'invention se rapporte à un dispositif permettant de maintenir en coulissement un flotteur du moyen détecteur sur une jupe. L'invention se rapporte également un procédé de montage d'un tel moyen détecteur.

Un but de l'invention est de permettre un maintien d'un flotteur sur une jupe, le flotteur pouvant coulisser le long de la jupe. Un autre but de l'invention est de fournir une butée basse du flotteur sur la jupe très précise. Un but supplémentaire de l'invention est de diminuer le nombre de pièces nécessaire à la réalisation du moyen détecteur. Un autre but de l'invention est de diminuer le coût de fabrication du moyen détecteur.

Un véhicule automobile est muni de plusieurs réservoirs hydrauliques. Par exemple, un véhicule automobile comporte un réservoir de liquide de frein, et un réservoir de carburant. Le carburant contenu dans le réservoir de carburant permet de mettre en route le véhicule, et d'assurer son déplacement. Le liquide de frein contenu dans le réservoir de liquide de frein, au contraire, permet de freiner, ralentir, ou arrêter le véhicule. Dans les deux cas, une utilisation normale du véhicule consomme du liquide de frein, et du carburant. Le niveau de liquide hydraulique dans ses deux réservoirs diminue donc au cours de l'utilisation du véhicule.

Le liquide de frein contenu dans le réservoir de liquide de frein est injecté à l'endroit de freins de roues lors d'un actionnement d'une commande de frein par un conducteur. A la fin d'un freinage, le liquide de frein est renvoyé en direction du réservoir hydraulique. Cependant, il est possible qu'un dispositif de freinage par lequel passe le liquide frein soit sujet à une fuite hydraulique. Ainsi, tout le liquide de frein injecté à l'endroit des roues du véhicule ne retourne pas dans le réservoir hydraulique à la fin du freinage. Le niveau de liquide de frein diminue donc dans le réservoir. De même, l'usure des moyens de friction au cours de freinages successifs contribue à augmenter un volume du dispositif de freinage. Le volume de liquide de frein injecté à l'endroit des freins lors d'un freinage tend donc à augmenter. Une quantité plus importante de liquide de frein est donc soumis à la fuite hydraulique.

Le carburant, lui, est envoyé à travers un circuit en direction de pistons permettant d'entraîner en rotation un vilebrequin. Le vilebrequin transmet un mouvement rotatif à une boîte de vitesse et aux roues. Le carburant envoyé dans les pistons y est brûlé. L'air brûlé est éjecté vers des pots d'échappement du véhicule. Le niveau de carburant dans le réservoir diminue donc continuellement au cours d'une utilisation du véhicule.

Pour permettre une utilisation en toute sécurité du véhicule, il est nécessaire que le niveau de liquide de frein et de carburant dans les réservoirs correspondants soit suffisant. Le conducteur doit donc remplir régulièrement ces deux réservoir, afin de toujours disposer d'une quantité de liquide suffisante.

Il est donc connu, afin d'informer un conducteur du niveau de liquide dans les réservoirs, d'utiliser un dispositif de détection du niveau de liquide. Par exemple, quand le niveau de carburant est inférieur à un niveau minimum prédéterminé, un voyant lumineux s'allume sur un tableau de bord du véhicule. Il en est de même pour un niveau de liquide de frein dans le réservoir de liquide de frein. Des réservoirs de liquide de frein munis de détecteur de niveau comportant des flotteurs guidés sont décrits notamment dans EP-1040977 ou US-A-5083115.

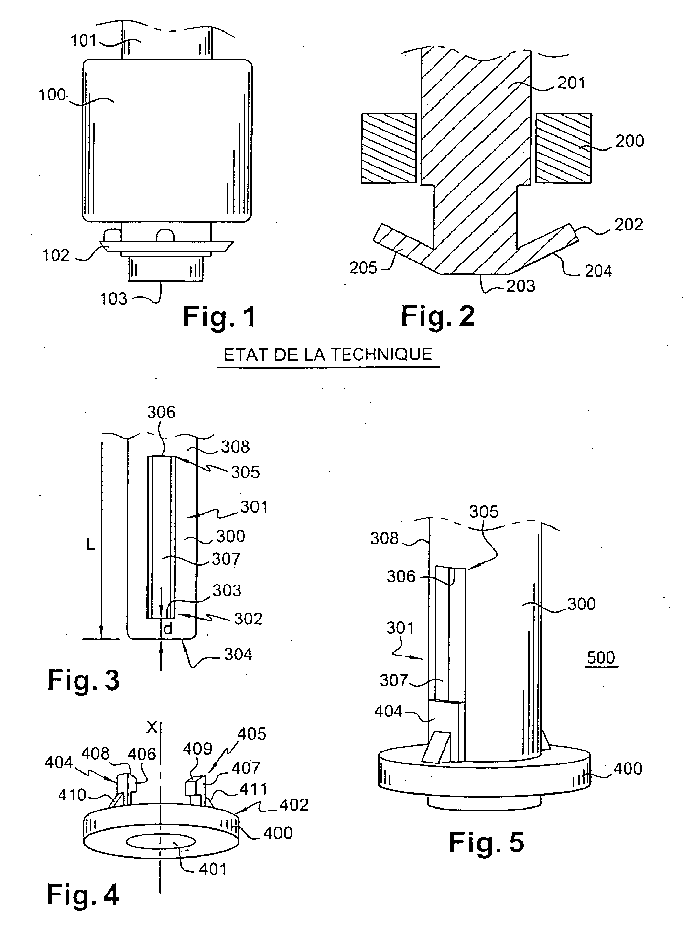

Pour cela, on dispose par exemple un dispositif de détection du niveau de liquide hydraulique dans le réservoir correspondant. Un flotteur est monté coulissant le long d'une tige cylindrique. Un corps de la tige cylindrique est muni d'un circuit électrique. Le flotteur est muni d'un aimant ouvrant ou fermant le circuit électrique contenu dans la jupe. La tige cylindrique est immergée à l'intérieur du réservoir. Le flotteur coulisse le long de la tige cylindrique, entre une butée basse et une butée haute de la tige cylindrique. Lorsque le réservoir hydraulique est plein, le flotteur est dans une position haute maximale le long de la jupe. Au fur et à mesure que le niveau de liquide diminue dans le réservoir, le flotteur descend le long de la jupe. Lorsque le flotteur atteint une position critique sur la tige cylindrique, correspondant à un niveau critique de liquide dans le réservoir, le circuit électrique contenu dans la tige cylindrique est fermé. La fermeture du circuit électrique permet l'allumage d'un voyant lumineux sur le tableau de bord. Un conducteur est ainsi informé de la nécessité de procéder à un remplissage du réservoir concerné. Pour maintenir le flotteur sur la tige, il est connu d'utiliser, comme cela est représenté sur la figure 1 de l'état de la technique, une butée basse 102 fixée sur une extrémité basse 103 de la tige cylindrique 101. La butée basse 102 est souvent une pièce supplémentaire, fixée par exemple sur la tige cylindrique 101. Ainsi, on fixe une extrémité haute (non visible sur la figure 1) de la tige cylindrique 101 sur une paroi interne du réservoir hydraulique (non représenté). Puis, on monte le flotteur 100 en coulissement sur la tige 101. On vient ensuite clipser la rondelle 102 à l'endroit de l'extrémité basse 103. La rondelle 102 forme une butée basse précise pour le flotteur 100.

Cependant, il existe un risque que la rondelle 102 se désolidarise de la tige cylindrique 101. Si la butée basse 102 se détache de la tige 101 et une fois que le niveau de liquide dans le réservoir est insuffisant pour maintenir le flotteur 100 sur la tige 101, il est possible que le flotteur 100 se sépare de la tige 101. Le flotteur 100 se retrouve alors n'importe où dans le réservoir hydraulique. Le conducteur ne peut plus être correctement informé du niveau de liquide dans le réservoir.

Sur la figure 2 de l'état de la technique est représenté un deuxième exemple de réalisation d'une butée basse 202 d'un flotteur 200 sur une tige cylindrique 201. La butée basse 202 est en forme d'ancre. L'ancre 202 fait partie intégrante de la tige cylindrique 201. Lors du moulage de la tige cylindrique 201, on ménage à l'endroit d'une extrémité basse 203 deux ailettes 204 et 205. Lors de l'introduction du flotteur 200 le long de la tige cylindrique 201, les ailettes 204 et 205 sont maintenues le long d'un corps de la tige cylindrique 201. Une fois le flotteur monté en coulissement le long de la tige 201, les ailettes 204 et 205 sont relâchées. La butée basse 202 est ainsi formée. Un tel mode de réalisation d'une butée basse permet d'éliminer le risque de perte du flotteur 200 dans le réservoir.

Cependant, la butée basse 202 en forme d'ancre ne fournit pas une butée basse précise pour le flotteur 200. En effet, les ailettes 204 et 205 ont une certaine souplesse. Les ailettes 204 et 205 peuvent donc fléchir sous un poids du flotteur 200. Un allumage du voyant lumineux peut alors varier, et ne pas toujours dépendre du même niveau de liquide dans le réservoir.

Dans l'invention, on cherche à résoudre les problèmes exposés ci-dessus, en proposant un dispositif de détection d'un niveau de liquide dans un réservoir de fluide hydraulique de véhicule automobile très précis. On cherche également à fournir un tel moyen détecteur de fabrication simple, et de coût de fabrication peu élevé.

Le principe de l'invention repose sur un dispositif de maintien d'un flotteur sur une tige cylindrique, intégré à la tige cylindrique et au flotteur eux-mêmes. Les butées haute et basse du flotteur sur la tige cylindrique sont très précises, et font partie intégrante de la tige cylindrique. On écarte ainsi tout risque de désolidarisation d'une butée basse, et donc de perte du flotteur.

Pour cela, dans un exemple de réalisation préféré de l'invention, on réalise sur la tige cylindrique deux rainures diamétralement opposées. Les rainures s'étendent verticalement dans une longueur de la tige cylindrique. Les rainures ne sont pas débouchantes. C'est à dire que les rainures ne s'étendent pas sur toute une longueur de la tige cylindrique. Une extrémité haute d'une rainure est située en dessous d'une extrémité haute de la jupe. De même, une extrémité basse de la rainure est située au-dessus d'une extrémité basse de la tige.

On réalise un flotteur, par exemple par moulage, muni de moyens permettant au flotteur de coulisser dans les rainures de la tige cylindrique. Les moyens permettant le coulissement sont par exemple deux doigts en saillies sur le flotteur. Ces parties en saillies sont diamétralement opposées l'une de l'autre par rapport à un diamètre de la tige cylindrique. Ces doigts en saillies s'étendent parallèlement à un axe de rotation du flotteur. Les doigts en saillies ont une souplesse suffisante pour autoriser leur écartement l'une de l'autre, vers l'extérieur du flotteur. On permet ainsi une introduction de la tige cylindrique dans un orifice centrale du flotteur. Une fois relâchées les parties en saillies reprennent une position repos. Les doigts sont alors logés chacun dans une rainures de la tige cylindrique. Ainsi, le flotteur coulisse le long de la tige cylindrique par l'intermédiaire de ces pièces en saillies coulissant dans les rainures. Les parties en saillies ont un contour extérieur qui suit au moins partiellement un contour interne des rainures.

Une extrémité haute des parties en saillies vient en butée contre l'extrémité haute d'une rainure lorsque le réservoir de fluide hydraulique est plein. Inversement, une extrémité basse des pièces en saillies vient en butée contre l'extrémité basse de la rainure lorsque le liquide hydraulique a un niveau insuffisant dans le réservoir.

D'une manière générale, on ménage au moins une rainure sur la jupe, et au moins une patte sur le flotteur. Une épaisseur du flotteur est telle, par rapport à une longueur de la tige cylindrique, que le flotteur est toujours maintenu perpendiculaire à la tige cylindrique quelque soit le niveau de liquide dans le réservoir, et quelque soit le nombre de pattes et de rainures.

Selon une profondeur du réservoir dans lequel la jupe cylindrique est immergée, une longueur de la jupe peut varier. De même, selon le niveau dans le réservoir hydraulique considéré comme critique, l'extrémité basse de la rainure descend plus au moins bas le long de la tige cylindrique.

La fabrication du moyen de détection de l'invention est simple et le nombre d'opération réduit. En effet, l'insertion du flotteur le long de la tige cylindrique permet en même temps la mise en place, le maintien et le guidage du flotteur sur la tige.

Le flotteur peur être muni d'un aimant. Par exemple, l'aimant ouvre ou ferme un circuit électrique contenu dans un corps de la tige cylindrique. Le circuit ouvert ou fermé, selon un niveau de liquide dans le réservoir et donc selon une position du flotteur le long de la jupe, permet d'éteindre ou allumer un voyant lumineux sur un tableau de bord. Le flotteur peut être surmoulé autour de l'aimant. Il est également possible de mouler un flotteur seul, en ménageant un logement pour introduire par la suite l'aimant. Par exemple, on ménage un logement circulaire dans le corps du flotteur. Une lumière à l'endroit d'une surface extérieure du flotteur débouche dans le logement. Une fois le flotteur moulé, on introduit l'aimant circulaire dans le logement à travers la lumière. L'aimant circulaire, est évidé en son centre sur un diamètre supérieur à un diamètre de la tige cylindrique. Ainsi, un maintient longitudinal de l'aimant sur le flotteur est réalisé par le flotteur lui-même, tandis qu'un maintient radiale de l'aimant sur le flotteur est assuré par la tige cylindrique.

Dans un exemple de réalisation particulier de l'invention, le moyen détecteur de niveau de liquide dans un réservoir est monté sur une face interne d'un bouchon d'obturation du réservoir. Ainsi, lorsque le réservoir est refermé, la tige cylindrique et le flotteur sont immergés dans le réservoir. Il est également possible de surmouler la tige cylindrique sur une demi-coquille formant une partie inférieure ou une partie supérieure du réservoir. Enfin, il est également possible de réaliser par moulage la tige cylindrique seule. Dans ce cas, la tige cylindrique est munie de moyen permettant de clipser la tige cylindrique contre une paroi interne du réservoir, ou sur la face interne du bouchon d'obturation. Dans tous les cas, le moyen de détection, composé de la tige cylindrique et du flotteur, sont logés à l'intérieur du réservoir.

L'invention concerne également un réservoir de fluide muni d'un tel moyen de détection.

Enfin, l'invention concerne un procédé de montage d'un tel moyen de détection de l'invention.

L'invention à donc pour objet un moyen détecteur de niveau de liquide dans un réservoir de fluide hydraulique, tel que défini dans la revendication 1.

L'invention a également pour objet un procédé de montage d'un moyen détecteur, tel que défini dans la revendication 17.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 et 2 : Deux exemples de réalisation de moyens détecteurs de l'état de la technique, déjà décrits ;
- Figure 3 : Une représentation d'une jupe d'un moyen détecteur de l'invention ;
- Figure 4 : Une représentation d'un flotteur de l'invention ;
- Figure 5 : Une représentation du moyen détecteur de l'invention.

Sur la figure 3, on peut voir une jupe 300 munie de deux cannelures 301 de l'invention. La jupe 300 est une tige cylindrique. Une seule cannelure 301 est visible, la seconde cannelure 301 étant diamétralement opposée à la première cannelure. Il est également possible de prévoir d'avantage de cannelures 301. Dans ce cas là, les cannelure 301 sont uniformément réparties sur toute une surface externe de la jupe 300. Les cannelures 301 s'étendent partiellement sur une longueur L de la jupe 300. Les cannelures 301 ne sont pas débouchantes. C'est à dire qu'une extrémité basse 302 d'une cannelure 301 se termine par exemple par un taquet formant butée basse 303. Selon la longueur L de la jupe 300 et le niveau de liquide déterminé comme critique dans le réservoir (non représenté), une distance d entre l'extrémité basse 302 de la cannelure 301 et une extrémité basse 304 de la jupe cylindrique varie. De même, une extrémité haute 305 de la cannelure 301 se termine par un taquet formant butée haute 306. Dans un exemple de réalisation particulier de l'invention, la cannelure 301 a un profil rectangulaire.

Sur la figure 4, on peut voir un flotteur 400 de l'invention. Le flotteur 400 a une forme en anneau. Un évidemment 401 central du flotteur 400 a un diamètre supérieur à un diamètre de la jupe 300. La jupe 300 peut ainsi être facilement introduite dans l'évidement 401. Une face supérieure 402 du flotteur 400 est munie de deux pattes 404 et 405. Les pattes 404 et 405 s'étendent verticalement , parallèlement à un axe X de rotation du flotteur 400. Les pattes 404 et 405 sont réparties sur la face supérieure 402 du flotteur 400 de telles manières que chacune des pattes 404 et 405 coïncide avec une cannelure 301 de jupe 300 lorsque le flotteur 400 est monté sur la jupe 300.

Chaque patte 404 et 405 est munie d'une protubérance 406 et 407. Les protubérances s'étendent perpendiculairement aux pattes 404 et 405, et sont dirigées vers l'évidement 401 du flotteur 400. Les protubérances 406 et 407 ont un contour externe rectangulaire, de dimensions sensiblement égales à des dimensions internes des cannelures 301. Par approximativement égale, on entend que les protubérances 406 et 407 ont des dimensions leurs permettant d'être introduite dans les cannelures 301, et de coulisser dans les dites cannelures 301. Les pattes 404 et 405 sont chacune munies d'un chanfrein 408 et 409 à l'endroit d'une extrémité haute des pattes 404 et 405. Par extrémité haute, on entend extrémité dirigée vers un haut du réservoir (non représenté) lorsque le moyen détecteur de l'invention est monté dans le réservoir. Par extrémité basse, on entend extrémité dirigée vers un fond du même réservoir.

Dans un autre exemple de réalisation de l'invention, les protubérances 406 et 407 ont une base rectangulaire sur toute leur longueur.

Les pattes 404 et 405 sont réparties sur un diamètre interne du flotteur 400, suivant un diamètre de l'évidement 401. Le diamètre sur lequel les pattes 404 et 406 sont réparties et tel qu'il permet aux protubérances 406 et 407 d'être chacune logées dans une cannelure 301 lorsque le flotteur 400 est monté coulissant sur la tige cylindrique 300.

Dans un autre exemple de réalisation, il est possible de réaliser des pattes 404 et 405 démunies de protubérance. Dans ce cas, se sont les pattes 404 et 405 entières qui coulissent dans les cannelures 301. Les pattes 404 et 405 sont alors disposées sur un diamètre interne du flotteur 400 inférieur a un diamètre de la jupe 300. Ainsi, les pattes 404 et 405 peuvent être logées dans les cannelures 301 lorsque le flotteur 400 est monté le long de la jupe 300.

Dans un autre exemple de réalisation de l'invention, il est possible de prévoir un nombre de pattes 404 et 405 plus important. On peut par exemple prévoir trois pattes, réparties uniformément sur la face supérieure 402 du flotteur 400. Dans ce cas, la jupe 300 est également munie de trois cannelures 301 réparties uniformément sur une paroi externe de la jupe 300.

Il est possible de prévoir un nombre de pattes plus important, concordant avec un nombre de cannelures plus important également.

Dans un exemple de réalisation particulier de l'invention, des jambes de force 410 et 411 permettent de renforcer respectivement les pattes 404 et 405. La jambe de force 410 relie donc obliquement la patte 404 à la face supérieure 402 du flotteur 400. De même, la jambe de force 411 relie obliquement la pattes 405 à la face supérieure 402 du flotteur 400. Les jambes de force 410 et 411 permettent notamment de maintenir les pattes 404 et 405 dans leur position verticale. Ainsi, une fois que le flotteur 400 est introduit le long de la jupe 300, les jambes de force 410 et 411 obligent les pattes 404 et 405 à revenir dans leur positon initiale c'est à dire verticale, et donc à être correctement positionnées dans les cannelures 301. Les jambe de force 410 et 411 permettent également de maintenir en forme et en position les pattes 404 et 405 le long des cannelures 301, quelque soit la température à l'intérieur du réservoir. En effet, il est possible que la température varie à l'intérieur du réservoir. Selon le matériau utilisé pour fabriquer le moyen de détection de l'invention, il est possible qu'une forme des pattes 404 et 405 soit légèrement modifiée du fait de la chaleur.

Dans un exemple de réalisation particulier de l'invention, le moyen de détection, c'est à dire la jupe 300 et le flotteur 400, est fabriqué en polypropylène.

Sur la figure 5, on peut voir le moyen de détection 500 de l'invention. Le flotteur 400 est monté coulissant sur la jupe 300. Les pattes 404 et 405 coulissent le long des cannelures 301. Une face interne des protubérance 406 et 407 (non visible sur la figure 5 ) sont en appui sur un fond 307 des cannelures 301. Sur la figure 5, le flotteur 400 est en butée basse sur la jupe 300. Dans un réservoir muni du moyen de détection 500 de l'invention, cette position basse du flotteur 400 correspond par exemple à un niveau critique de liquide dans le réservoir hydraulique.

La jupe 300 est par exemple munie d'un dispositif électronique. Le dispositif électronique (non représenté) est logé à l'intérieur d'un corps de la jupe 300. Le flotteur 400 est par exemple muni d'un aimant. Le circuit électronique peut être ouvert en l'absence de l'aimant logé dans le flotteur 400. Ainsi, le circuit est ouvert tant que le flotteur 400 n'a pas sur la jupe 300 une position permettant, au moyen de l'aimant, de fermer le circuit. Lorsque le flotteur 400 est en position basse sur la jupe 300, le circuit électronique est fermé. Un voyant lumineux s'allume alors sur un tableau de bord du véhicule (non représenté). Un conducteur sait ainsi que le niveau de liquide hydraulique dans le réservoir est faible, et qu'il est nécessaire de le remplir à nouveau.

Le moyen détecteur 500 de l'invention peut être immergé dans le réservoir hydraulique de différentes manières. Dans un exemple particulier de réalisation de l'invention, le moyen détecteur 500 fait partie intégrante d'un bouchon du réservoir. Par exemple, la jupe 300 est moulée en même temps que le bouchon. C'est à dire, qu'une extrémité haute 308 de la jupe 300 est fixée sur une face interne, dirigée vers l'intérieur du réservoir, du bouchon d'obturation. Lorsque l'on souhaite refermer le réservoir, au moyen du bouchon, le moyen de détection 500 est introduit à l'intérieur du réservoir.

Dans un autre exemple de réalisation de l'invention, le moyen détecteur 500 est moulé sur une demi-coquille du réservoir. Par exemple, l'extrémité 308 de la jupe 300 est moulée sur une paroi interne d'une demi-coquille du réservoir. Ainsi, lorsque le réservoir est formé, en associant deux demi-coquilles, le moyen détecteur 500 est contenu dans le réservoir.

Il est également possible de réaliser le moyen de détection seul. C'est à dire que la jupe 300 est moulée indépendamment de toute autre partie du réservoir. L'extrémité 308 de la jupe 300 peut alors être munie de moyens clipsables. On fixe ainsi la jupe 300 à une paroi interne d'une demie coquille du réservoir, ou à une face interne du bouchon d'obturation.

L'invention concerne également un procédé de montage du moyen détecteur 500 de l'invention. Pour réaliser le détecteur 500, on ménage deux cannelure 301 sur un corps de la jupe 300. Les cannelure 301 peuvent être moulées en même temps que la jupe 300.

Il est également possible de réaliser les cannelures 301 une fois la jupe 300 moulée. On entaille par exemple la jupe 300 sur une longueur et une largeur souhaitées.

Les cannelure 301 s'étendent verticalement sur une longueur partielle de la jupe. On ne fait pas déboucher les cannelures 301 vers l'extérieur de la jupe 300.

On moule ensuite un flotteur 400 muni de deux pattes 404 et 405. Les pattes 404 et 405 sont moulées sur une face supérieur 402 du flotteur 400. Elles s'étendent verticalement, parallèlement à l'axe X du flotteur 400. La position des pattes 404 et 405 est telle que les pattes coïncident avec les cannelures 301 sur la jupe 300.

On monte ensuite le flotteur 400 le long de la jupe 300 en écartant les pattes 404 et 405 l'une de l'autre.

On positionne alors le flotteur 400 par rapport au corps de la jupe 300, de manière à faire coïncider chaque patte 404 et 405 avec une cannelure 301.

On relâche alors les pattes 404 et 405 du flotteur 400. Les pattes 404 et 405 viennent se loger dans les cannelures 301.Le flotteur 400 peut coulisser le long de la jupe 300 par l'intermédiaire des pattes 404 et 405.

Le moyen détecteur 500 permet une détection sûre du niveau de liquide dans un réservoir hydraulique. La détection est sûre du faite de la précision de la butée basse 303 sur la jupe 300. Le flotteur 400 ne peut pas se désolidariser de la jupe 300. Les pattes 404 et 405 logées dans les cannelure 301 maintiennent le flotteur 400 sur la jupe 300. Enfin, le moyen détecteur 500 de l'invention est de réalisation simple, et de coût peu élevé. En effet, aucune pièce supplémentaire n'est utilisée en plus de la jupe 300 et du flotteur 400. Les deux pièces, jupe 300 et flotteur 400, indispensables au fonctionnement du moyen détecteur 500 se suffisent pour permettre le maintient du flotteur 400 et son bon coulissement le long de jupe 300.

L'aimant utilisé dans le flotteur 400 est avantageusement un aimant ferrite. En effet, l'aimant ferrite présente une bonne résistance aux températures et aux chocs. Par ailleurs, l'aimant ferrite supporte d'être au contact du liquide hydraulique à l'intérieur du réservoir. Ainsi, si le flotteur 400 n'est pas surmoulé autour de l'aimant, il est possible de disposer l'aimant ferrite dans un logement ménagé sur le flotteur 400, dans un diamètre interne du flotteur 400, c'est à dire dirigé vers l'évidement 401. Le logement ne doit pas nécessairement être refermé une fois l'aimant ferrite disposé.

## Revendications

1. Moyen détecteur (500) de niveau de liquide dans un réservoir de liquide de frein pour véhicule comprenant une jupe(300), munie d'une butée haute (306) à une première extrémité (308), et d'une butée basse (303) à une deuxième extrémité (304),
- un flotteur (400) coulissant le long d'une tige de la jupe entre la butée haute et la butée basse,
**caractérisé en ce que** le flotteur est muni d'au moins une patte (404, 405), et **en ce que** la jupe est munie d'au moins une cannelure (301) verticale s'étendant partiellement sur une longueur (L) de la jupe, au moins une patte coulissant dans ladite cannelure, et **en ce que** les cannelures forment par une première extrémité (305) la butée haute (306) du flotteur, et par une seconde extrémité (302) la butée basse (303) du flotteur.

2. Moyen détecteur selon la revendication 1, **caractérisé en ce que** le flotteur est muni de deux pattes (404 et 405) et **en ce que** la jupe est munie de deux cannelures (301), les pattes coulissant dans les cannelures.

3. Moyen détecteur selon l'une des revendications 1 à 2, **caractérisé en ce que** les pattes ont une même largeur que les cannelures.

4. Moyen détecteur selon l'une des revendications 1 à 3, **caractérisé en ce que** les pattes sont situées sur un diamètre inférieur à un diamètre d'un évidemment (401) du flotteur, une face interne de chaque patte étant en contact avec un fond (307) d'une cannelure.

5. Moyen détecteur selon l'une des revendications 1 à 3, **caractérisé en ce que** les pattes sont situées sur un diamètre interne du flotteur, et **en ce que** chaque patte est munie sur une face interne d'une protubérance (406, 407) s'étendant perpendiculairement à la patte, la protubérance étant logée dans une cannelure.

6. Moyen détecteur selon la revendication 5, **caractérisé en ce que** les protubérances ont une même largeur que les pattes.

7. Moyen détecteur selon l'une des revendications 5 à 6, **caractérisé en ce que** les protubérances sont munies d'un chanfrein (408, 409) sur une extrémité supérieure.

8. Moyen détecteur selon l'une des revendications 1 à 7, **caractérisé en ce que** chaque patte est munie sur la face externe d'une jambe de force (410, 411), reliant la patte à un corps (402) du flotteur.

9. Moyen détecteur selon l'une des revendications 1 à 8, **caractérisé en ce que** le flotteur est muni d'un aimant.

10. Moyen détecteur selon la revendication 9, **caractérisé en ce que** l'aimant est un aimant ferrite.

11. Moyen détecteur selon l'une des revendications 1 à 10, **caractérisé en ce qu'**il est moulé sur un bouchon d'obturation du réservoir hydraulique, la première extrémité de la jupe étant solidaire d'une face interne du bouchon.

12. Moyen détecteur selon l'une des revendications 1 à 10, **caractérisé en ce qu'**il est moulé sur une demi coquille du réservoir hydraulique, une extrémité de la jupe étant solidaire d'une paroi interne de la demi coquille.

13. Moyen détecteur selon l'une des revendications 1 à 10, **caractérisé en ce que** la jupe est moulée seule, une de ses extrémités étant fixée par encliquetage sur une paroi interne du réservoir.

14. Moyen détecteur selon l'une des revendications 1 à 13, **caractérisé en ce qu'**il est en polypropylène.

15. Moyen détecteur selon l'une des revendications 1 à 14, **caractérisé en ce qu'**un capteur de position du flotteur est logé dans un corps de la jupe, un dispositif d'information d'un conducteur informant le conducteur de la position du flotteur, ledit dispositif d'information étant muni d'un voyant lumineux sur un tableau de bord, le voyant s'allumant lorsque le flotteur est dans une position inférieure ou égale à une position basse sur la jupe.

16. Réservoir de liquide hydraulique muni d'un moyen détecteur (500) selon l'une quelconque des revendications 1 à 15.

17. Procédé de montage d'un moyen détecteur (500) de niveau de liquide dans un réservoir hydraulique d'un véhicule automobile **caractérisé en ce qu'**il comprend les étapes
- on ménage au moins une cannelure (301) sur une tige formant un corps d'une jupe (300), s'étendant verticalement sur une longueur partielle de la jupe, ces cannelures formant par une première extrémité (305) une butée haute (306) du flotteur, et par une seconde extrémité (302) une butée basse (303) du flotteur, au moins une desdites cannelures n'étant pas débouchante,
- on moule un flotteur (400) muni d'au moins une patte (404, 405), de telle manière qu'une position de la patte sur le flotteur concordent avec une position d'une cannelure sur la jupe,
- on monte le flotteur le long de la jupe, en écartant ladite patte vers l'extérieur du flotteur,
- on positionne le flotteur par rapport au corps de la jupe de manière à ce que ladite patte soit en face d'une cannelure,
- on relâche ladite patte du flotteur, le flotteur coulissant le long de la jupe par l'intermédiaire de ladite patte.

## Claims

1. Detector (500) for detecting the fluid level in a brake fluid reservoir for a vehicle, comprising a skirt (300) provided with an upper stop (306) at a first end (308) and with a lower stop (303) at a second end (304),
- a float (400) sliding up and down a rod belonging to the skirt between the upper stop and the lower stop,
- which detector is **characterized in that** the float is provided with at least one tab (404, 405), and **in that** the skirt is provided with at least one vertical groove (301) extending partially along a length (L) of the skirt, at least one tab sliding in said groove, and **in that** the grooves form by a first end (305) the upper stop (306) of the float, and by a second end (302) the lower stop (303) of the float.

2. Detector according to Claim 1, **characterized in that** the float is provided with two tabs (404 and 405) and **in that** the skirt is provided with two grooves (301), the tabs sliding in the grooves.

3. Detector according to either of Claims 1 and 2, **characterized in that** the tabs are the same width as the grooves.

4. Detector according to one of Claims 1 to 3, **characterized in that** the tabs are situated on a diameter less than a diameter of a recess (401) of the float, an inside face of each tab being in contact with the innermost wall (307) of a groove.

5. Detector according to one of Claims 1 to 3, **characterized in that** the tabs are situated on an inside diameter of the float, and **in that** each tab is provided on an inside face with a protuberance (406, 407) extending at right angles to the tab, the protuberance being housed in a groove.

6. Detector according to Claim 5, **characterized in that** the protuberances are the same width as the tabs.

7. Detector according to one of Claims 5 to 6, **characterized in that** the protuberances have a chamfer (408, 409) on an upper end.

8. Detector according to one of Claims 1 to 7, **characterized in that** each tab is provided on the outside face with a prop (410, 411) connecting the tab to a body (402) of the float.

9. Detector according to one of Claims 1 to 8, **characterized in that** the float is provided with a magnet.

10. Detector according to Claim 9, **characterized in that** the magnet is a ferrite magnet.

11. Detector according to one of Claims 1 to 10, **characterized in that** it is moulded on a closing cap of the hydraulic reservoir, the first end of the skirt being integral with an inside face of the cap.

12. Detector according to one of Claims 1 to 10, **characterized in that** it is moulded on a half-shell of the hydraulic reservoir, one end of the skirt being attached to an inside wall of the half-shell.

13. Detector according to one Claims 1 to 10, **characterized in that** the skirt is moulded on its own, one of its ends being snap-fastened to an inside wall of the reservoir.

14. Detector according to one of Claims 1 to 13, **characterized in that** it is made of polypropylene.

15. Detector according to one of Claims 1 to 14, **characterized in that** a float position sensor is housed in a body of the skirt, a driver information device informing the driver of the position of the float, said information device being provided with a warning light on a dashboard, which light comes on when the float is in a position lower than or equal to a low position on the skirt.

16. Hydraulic fluid reservoir provided with a detector (500) according to any one of Claims 1 to 15.

17. Method for assembling a fluid level detector (500) in a hydraulic reservoir of a motor vehicle, **characterized in that** it comprises the following steps:
- at least one groove (301) is formed in a rod forming a body of a skirt (300) extending vertically for part of the length of the skirt, these grooves forming by a first end (305) an upper stop (306) of the float, and by a second end (302) a lower stop (303) of the float, at least one of said grooves being closed at both ends,
- a float (400) is moulded with at least one tab (404, 405), in such a way that a position of the tab on the float coincides with a position of a groove on the skirt,
- the float is fitted onto the skirt by forcing said tab in a radially outward direction relative to the float,
- the float is positioned relative to the skirt body in such a way that said tab faces a groove, and
- said tab of the float is released, allowing the float to slide up and down the skirt by means of said tab.

## Patentansprüche

1. Einrichtung (500) zur Erfassung des Flüssigkeitsstands in einem Bremsflüssigkeitsbehälter für ein Fahrzeug, mit einer Schürze (300), die an einem ersten Ende (308) mit einem oberen Anschlag (306) und an einem zweiten Ende (304) mit einem unteren Anschlag (303) versehen ist,
- wobei ein Schwimmer (400) entlang einer Stange der Schürze zwischen dem oberen Anschlag und dem unteren Anschlag gleitet,
**dadurch gekennzeichnet, dass** der Schwimmer mit mindestens einer Lasche (404, 405) versehen ist, die Schürze mit mindestens einer senkrechten Rille (301) versehen ist, die sich teilweise über eine Länge (L) der Schürze erstreckt, wobei mindestens eine Lasche in der Rille gleitet, und die Rillen über ein erstes Ende (305) den oberen Anschlag (306) des Schwimmers und über ein zweites Ende (302) den unteren Anschlag (303) des Schwimmers bilden.

2. Erfassungseinrichtung nach Anspruch 1, **dadurch gekennzeichnet, dass** der Schwimmer mit zwei Laschen (404 und 405) und die Schürze mit zwei Rillen (301) versehen ist, wobei die Laschen in den Rillen gleiten.

3. Erfassungseinrichtung nach einem der Ansprüche 1 bis 2, **dadurch gekennzeichnet, dass** die Laschen die gleiche Länge haben wie die Rillen.

4. Erfassungseinrichtung nach einem der Ansprüche 1 bis 3, **dadurch gekennzeichnet, dass** die Laschen auf einem Durchmesser angeordnet sind, der kleiner ist als ein Durchmesser einer Aussparung (401) des Schwimmers, wobei eine Innenfläche jeder Lasche einen Boden (307) einer Rille berührt.

5. Erfassungseinrichtung nach einem der Ansprüche 1 bis 3, **dadurch gekennzeichnet, dass** die Laschen an einem Innendurchmesser des Schwimmers angeordnet sind und jede Lasche an einer Innenfläche mit einem Vorsprung (406, 407) versehen ist, der sich senkrecht zur Lasche erstreckt, wobei der Vorsprung in einer Rille angeordnet ist.

6. Erfassungseinrichtung nach Anspruch 5, **dadurch gekennzeichnet, dass** die Vorsprünge die gleiche Länge haben wie die Laschen.

7. Erfassungseinrichtung nach einem der Ansprüche 5 bis 6, **dadurch gekennzeichnet, dass** die Vorsprünge an einem oberen Ende mit einer Abschrägung (408, 409) versehen sind.

8. Erfassungseinrichtung nach einem der Ansprüche 1 bis 7, **dadurch gekennzeichnet, dass** jede Lasche an der Außenfläche mit einer Stütze (410, 411) versehen ist, die die Lasche mit einem Körper (402) des Schwimmers verbindet.

9. Erfassungseinrichtung nach einem der Ansprüche 1 bis 8, **dadurch gekennzeichnet, dass** der Schwimmer mit einem Magneten versehen ist.

10. Erfassungseinrichtung nach Anspruch 9, **dadurch gekennzeichnet, dass** der Magnet ein Ferritmagnet ist.

11. Erfassungseinrichtung nach einem der Ansprüche 1 bis 10, **dadurch gekennzeichnet, dass** sie auf einen Stopfen zum Verschließen des Hydraulikbehälters aufgeformt ist, wobei das erste Ende der Schürze mit einer Innenfläche des Stopfens fest verbunden ist.

12. Erfassungseinrichtung nach einem der Ansprüche 1 bis 10, **dadurch gekennzeichnet, dass** sie auf eine Halbschale des Hydraulikbehälters aufgeformt ist, wobei ein Ende der Schürze mit einer Innenwand der Halbschale fest verbunden ist.

13. Erfassungseinrichtung nach einem der Ansprüche 1 bis 10, **dadurch gekennzeichnet, dass** die Schürze allein geformt ist, wobei eines ihrer Enden durch Verrasten an einer Innenwand des Behälters befestigt ist.

14. Erfassungseinrichtung nach einem der Ansprüche 1 bis 13, **dadurch gekennzeichnet, dass** sie aus Polypropylen besteht.

15. Erfassungseinrichtung nach einem der Ansprüche 1 bis 14, **dadurch gekennzeichnet, dass** in einem Körper der Schürze ein Sensor zur Erfassung der Position des Schwimmers angeordnet ist, wobei eine Vorrichtung zur Benachrichtigung eines Fahrers den Fahrer über die Position des Schwimmers informiert, wobei die Benachrichtigungsvorrichtung mit einer Leuchtanzeige an einem Armaturenbrett versehen ist und die Anzeige leuchtet, wenn sich der Schwimmer in einer Position befindet, die unter einer niedrigen Position an der Schürze liegt oder dieser Position entspricht.

16. Behälter für Hydraulikflüssigkeit, der mit einer Erfassungseinrichtung (500) nach einem der Ansprüche 1 bis 15 ausgestattet ist.

17. Verfahren zur Montage einer Einrichtung (500) zur Erfassung des Flüssigkeitsstands in einem Hydraulikbehälter eines Kraftfahrzeugs, **dadurch gekennzeichnet, dass** das Verfahren die folgenden Schritte umfasst:
- mindestens eine Rille (301), die sich senkrecht über eine Teillänge der Schürze erstreckt, wird an einer Stange, die einen Körper einer Schürze (300) bildet, ausgebildet, wobei diese Rillen über ein erstes Ende (305) einen oberen Anschlag (306) des Schwimmers und über ein zweites Ende (302) einen unteren Anschlag (303) des Schwimmers bilden und mindestens eine der Rillen nicht durchgehend ist,
- ein Schwimmer (400), der mit mindestens einer Lasche (404, 405) versehen ist, wird so geformt, dass eine Position der Lasche am Schwimmer mit einer Position einer Rille an der Schürze übereinstimmt,
- der Schwimmer wird entlang der Schürze angebracht, indem die Lasche zum Äußeren des Schwimmers gespreizt wird,
- der Schwimmer wird bezüglich des Körpers der Schürze so positioniert, dass die Lasche einer Rille gegenüberliegt,
- die Lasche des Schwimmers wird wieder gelöst, wobei der Schwimmer über die Lasche entlang der Schürze gleitet.
